**Europäisches Patentamt**

**European Patent Office**

**Office européen des brevets**

(19)

(11) **EP 1 383 217 A1**

(12) **EUROPÄISCHE PATENTANMELDUNG**

(43) Veröffentlichungstag:
**21.01.2004 Patentblatt 2004/04**

(51) Int Cl.$^7$: **H02H 3/093**

(21) Anmeldenummer: **02405610.3**

(22) Anmeldetag: **16.07.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(71) Anmelder: **ABB RESEARCH LTD.**
**8050 Zürich (CH)**

(72) Erfinder:
• **Kramer, Beat**
**5210 Windisch (CH)**

• **Bloch, Richard**
**5415 Nussbaumen (CH)**
• **Baiatu, Tudor**
**5200 Brugg (CH)**
• **Hart, Uli**
**78343 Gaienhofen (DE)**

(74) Vertreter: **ABB Patent Attorneys**
**c/o ABB Schweiz AG,**
**Intellectual Property (CH-LC/IP),**
**Brown Boveri Strasse 6**
**5400 Baden (CH)**

(54) **Überstromauslöser für elektronische Schutzschalter und Verfahren zur Nachbildung einer Auslösekennlinie**

(57) Die vorliegende Erfindung betrifft einen Überstromauslöser für elektronische Schutzschalter, dessen Auslösekennlinie an eine beliebige zu schützende Lastkennlinie angepasst werden kann und zumindest einen logarithmischen Teilbereich (Th, Se, So) umfasst. Verfahren zur Nachbildung der Kennlinie beruhen auf einer periodischen Aufdatierung einer Systemgrösse (E, A, V), welche neben einem aktuellen Primärstromwert (I) auch einen vorherigen Zustandswert der Systemgrösse berücksichtigt. Insbesondere wird für einen thermischen Teilbereich (Th) der Kennlinie mit einer Energiebetrachtung ein physisches Bimetall nachgebildet, und für einen Sofortauslösebereich (So) wird ein Auslösezähler (A) eingeführt.

**Fig. 4**

**EP 1 383 217 A1**

**Beschreibung**

TECHNISCHES GEBIET

Die vorliegende Erfindung bezieht sich auf das Gebiet der Schutzschalter zum Schutz von unter Niederspannungen stehenden Leitungen, Motoren, Geräten und Anlagen vor den Folgen von Überlast- und Kurzschlussströmen. Dieses Gebiet umfasst sowohl Leitungsschutzschalter, d.h. Niederspannungsschalter mit relativ geringem Kurzschlussabschaltvermögen, als auch Leistungsschalter mit hohem Kurzschlussabschaltvermögen von über 35 kA. Sie betrifft einen Überstromauslöser für elektronische Leitungsschutzschalter mit einer durch eine Datenverarbeitungseinheit nachgebildeten Auslösekennlinie gemäss dem Oberbegriff des Patentanspruchs 1 sowie ein Verfahren zur Nachbildung einer Auslösekennlinie gemäss dem Oberbegriff des Patentanspruchs 5.

STAND DER TECHNIK

Konventionelle Geräteschutzschalter, Motorschutzschalter oder Überstromrelais weisen im allgemeinen einen thermischen Überlastauslöser mit einem Bimetall sowie einen elektromagnetischen Kurzschlussauslöser mit einer Schlagspule oder einer magnetischen Schnellauslösung auf. Beide Auslöser sind an einen Nenn- oder Bemessungsstrom und eine Auslösekennlinie des Schalters angepasst. Bei Überlast muss der Schalter nach einer vom Effektivwert des Stromes abhängigen Zeit (einige ms bis einige min) auslösen. Bei einem Kurzschluss, d.h. falls der Momentanwert des Stromes einen vorbestimmten Grenzwert überschreitet, muss der Schalter im allgemeinen so schnell als möglich, d.h. innerhalb einiger ms, öffnen. Diese Funktion wird bei elektromechanischen Schutzschaltern mit einer Schlagspule und einem im Kurzschlussfall stark beschleunigten Schlaganker erzielt. Die Einstellung des durch die Parameter der Schlagspule (Joch, Kern, Anker und Momentfeder) mitbestimmten Grenzwertes ist jedoch mit relativ grossen Toleranzen behaftet, zudem hängen Auslösecharakteristiken ohne thermische Kompensation signifikant von der Umgebungstemperatur ab. Bekannt sind ferner Schalter mit einem dritten Auslösebereich für eine sogenannte Selektiv- oder verzögerte Sofortauslösung. Im Selektivbereich soll nicht schnellstmöglich ausgelöst werden, sondern erst dann, wenn die Stromamplitude nicht innerhalb einer programmierbaren Verzögerungszeit (Anzahl Halbwellen) unter den Grenzwert sinkt, d.h. wenn dem Kurzschluss nicht selektiv durch einen näher beim Ort des Kurzschlusses liegenden nachgeordneten Schalter abgeholfen werden konnte. Eine thermische Verzögerung der Sofortauslösung wird beispielsweise mit einem zweiten Bimetall bewerkstelligt.

Bei einem strombegrenzenden Schalter der gattungsgemässen Art erfolgt die Überwachung eines Primärstromes elektronisch mittels Sensoren wie induktiven Stromwandlern, Hall-Sensoren, Messwiderständen oder Rogowski-Spulen. Einer oder beide der genannten Auslöser sind ersetzt durch eine Datenverarbeitungseinheit, welche beim Auftreten von Überströmen (Überlast- oder Kurzschlussströmen) angesteuert wird und dann über ein Schaltschloss auf eine Schaltstelle des Schalters wirkt. Bei selbstgespeisten Schaltern wird die Datenverarbeitungseinheit mit dem Strom eines den Primärstrom überwachenden Stromwandlers versorgt.

Ein strombegrenzender Schalter der gattungsgemässen Art kann leicht gefertigt werden, da für eine grosse Vielfalt von Schaltertypen als Ausgangskomponenten bei der Fertigung lediglich ein einziger Typ einer Datenverarbeitungseinheit und wenige Typen von Sensoren benötigt werden. Durch Eingabe schalterspezifischer technischer Daten können so bei der Fertigung die für die vorgesehene technische Anwendung des Schalters, etwa im Geräte-, Motor- oder Leitungsschutz, erforderlichen Auslösecharakteristiken sowie frei definierbare Auslösecharakteristiken, wie etwa thermisch verzögerte Kennlinien und Selektivkennlinien, realisiert werden. Gegebenenfalls weist der Schalter bei einem Wegfall eines als Bimetall ausgebildeten Überstromauslösers oder einer elektromechanischen Schlagspule eine geringere Verlustleistung auf. Auch bei gattungsgemässen elektronischen Schutzschaltern sind Abweichungen in Abhängigkeit von der Temperatur aufgrund der Drift der Stromsensoren zu beobachten, diese sind jedoch gering und können durch die Elektronik kompensiert werden.

Ein elektronischer Überstromauslöser für einen Niederspannungs-Leistungsschalter mit einer in einen Überlastbereich, einen verzögerten Kurzschlussbereich und einen unverzögerten Kurzschlussbereich unterteilten Kennlinie ist in der WO 02/01693 dargestellt. Dabei folgt die Überlastkennlinie der Beziehung $I^2t$ = const. Der daran anschliessende Kurzschlusskennlinienteil kann derselben Beziehung folgen, wird in der Regel jedoch als stromunabhängig festgelegt, so das sich in der Gesamtkennlinie ein horizontaler Abschnitt ergibt. Der Verlauf der Gesamtkennlinie ist monoton fallend, damit jedem Stromwert eine bestimmte Auslösezeit zugeordnet werden kann und damit eine eindeutige Selektivitätsstaffelung möglich ist.

Aus der Offenlegungsschrift DE 40 00 627 A1 ist ein digitaler Leistungstrennschalter bekannt, welcher mit einem zur Ausführung eines massgeschneiderten Überstromschutzes programmierten Mikroprozessor versehen ist. Die elektronische Auslösekurve ist durch einen spezifischen Algorithmus erzeugt, welcher sich an einer *thermischen* Auslösekurve eines nachgeschalteten thermomagnetischen Leistungsschalters orientiert. Der Algorithmus kann eine logarithmische Interpolation umfassen, so dass die logarithmische Natur einer Thermomagnetauslösekurve nachgebildet wird.

DARSTELLUNG DER ERFINDUNG

Aufgabe der vorliegenden Erfindung ist es, eine Auslösekennlinie von Überstromauslösern für elektronische Schutzschalter anzugeben, welche an die Lastkennlinie einer zu schützenden Leitung oder eines zu schützenden Gerätes angepasst ist. Diese Aufgabe wird durch einen Überstromauslöser für elektronische Schutzschalter mit den Merkmalen des Patentanspruchs 1 sowie ein Verfahren zur Nachbildung einer Auslösekennlinie eines elektronischen Schutzschalters mit den Merkmalen des Patentanspruchs 5 gelöst. Vorteilhafte Ausführungsformen sind Gegenstand der abhängigen Patentansprüche.

Kern der Erfindung ist es, die Auslösekennlinie zumindest abschnittsweise logarithmisch zu gestalten und damit insbesondere von einer $I^2t$ = const Beziehung und in einer doppelt logarithmischen Darstellung von der Form einer Geraden abzuweichen. Die logarithmische Form der Kennlinie gibt unter anderem die Tatsache wieder, dass beispielsweise bei einem konventionellen Auslöser eine Abkühlung eines Bimetalles bei kleineren Überströmen zu erhöhten Auslösezeiten führt und daraus bereits eine bessere Anpassung an die zu schützende Charakteristik der Last resultiert.

Bevorzugte Ausführungsformen betreffen eine logarithmische Ausgestaltung der Kennlinie im Bereich der Überlastauslösung, der Sofortauslösung oder der Selektiv- beziehungsweise verzögerten Sofortauslösung.

Ein erfindungsgemässes Verfahren zur Nachbildung einer logarithmischen Auslösekennlinie basiert darauf, dass nicht nur ein aktueller Messwert einer Systemgrösse zur Entscheidung über eine mögliche Auslösung herangezogen wird, sondern auch vorhergehende Systemgrössenwerte mitberücksichtigt werden. An Stelle einer isolierten Betrachtung des jeweils aktuellen Primärstromwertes wird dieser unter Mitberücksichtigung des bisherigen Systemgrössenwertes zu einem aktuellen Systemgrössenwert verarbeitet, welcher dann über eine mögliche Auslösung entscheidet.

Gemäss einer ersten Ausführungsform des erfindungsgemässen Verfahrens entspricht die Systemgrösse einer Bimetallenergie E. Unter Berücksichtigung einer Energieabnahme zwischen zwei aufeinanderfolgender Abtastungen, welche eine Abkühlung eines nachgeahmten physischen Bimetalles wiedergibt, wird eine logarithmische Kennlinie im thermischen oder Überlastbereich erzielt.

Im Sofortauslösebereich und im Selektivbereich wird eine logarithmische Kennlinie erhalten, indem geeignete Zähler als Systemgrössen unter Bezugnahme auf einen aktuellen Primärstromwert erhöht/verringert oder gegebenenfalls auf einen Startwert zurückgesetzt werden. Der Auslösezeitpunkt wird bestimmt durch das Erreichen einer vorbestimmten Auslösekennzahl durch den Zähler.

Es ist zu beachten, dass die erwähnte Auslösekennlinie nicht notwendigerweise vorgängig als solche in einer elektronischen Datenverarbeitungseinheit abgespeichert sein muss. Vielmehr ist das Verhalten des Überstromauslösers derart angepasst, dass die erwähnte Kennlinie beispielsweise bei einer Messung der Auslösezeit bei verschiedenen Überstromstärken so wiedergegeben wird. Durch die Freiheiten in der Wahl der verfahrensinhärenten numerischen Parameter kann die Kennlinienform an eine zu schützende Charakteristik oder Lastkennlinie, beispielsweise ein Erwärmungsverhalten einer Leitung, angepasst werden.

KURZE BESCHREIBUNG DER FIGUREN

Nachfolgend wird die Erfindung anhand von Ausführungsbeispielen im Zusammenhang mit den Zeichnungen näher erläutert. Es zeigen

Fig.1 eine konventionelle Bimetallkennlinie und zwei nachgebildete Auslösekennlinien im thermischen Überlastbereich,

Fig.2 zwei Primärstromhalbwellen mit äquidistanten Abtastwerten zur Illustration der Schwellwertreduktion,

Fig.3 vier Primärstromhalbwellen mit Abtastwerten und zugehörigen Zählerwerten, und

Fig.4 eine nachgebildete Auslösekennlinie mit je einem logarithmischen Überlast-, Sofortauslöse- und Selektivbereich.

Die in den Zeichnungen verwendeten Bezugszeichen sind in der Bezugszeichenliste zusammengefasst. Grundsätzlich sind gleiche Teile mit denselben Bezugszeichen versehen.

WEGE ZUR AUSFÜHRUNG DER ERFINDUNG

In Leitungsschutzschaltern mit einer elektronischen Überwachung eines potentiellen Überstroms nach der Erfindung wird als erstes die Funktionsweise eines konventionellen Bimetalles als Schutz vor thermischer Überlast durch den folgenden Algorithmus nachgebildet. Grundsätzlich wird dabei eine Energiebetrachtung eines Bimetalles durchgeführt, wobei die durch den Primärstrom im Bimetall deponierte Joul'sche Energie aufintegriert und durch eine Wärmeabgabe korrigiert wird. Letztere entspricht einer Abkühlung des Bimetalles durch Wärmeleitung, Konvektion und Wärmestrahlung. Die Systemgrösse "Bimetallenergie E" wird also unter Miteinbezug des aktuellen Messwerts I des Primärstromes in gewissen Zeitabständen aufdatiert. Eine Auslösung des Schutzschalters erfolgt, wenn die kumulierte Energie im Bimetall einen vorbestimmten Grenzwert $E_G$ überschreitet. Vereinfachend wird im Folgenden davon ausgegangen, dass die Aufdatierung der Systemgrösse E in äquidistanten Schritten erfolgt, d.h. beispielsweise ein Mal pro Wechselstromperiode, und dass die Stromstärke I einen mit mindestens derselben Frequenz gemessenen Effektivwert des Primärstroms bedeutet.

In einer ersten Ausführungsform wird eine sogenannt lineare Abkühlung angenommen, welche proportional zur momentanen Energie des Bimetalles ist und durch einen Abkühlfaktor $c_1$ wiedergegeben wird. Dadurch ergibt sich nach einer bestimmten Zeit ein stationärer Zustand. Mit den Bezeichnungen

$E_t$:     Energie (aktueller Wert)
$E_{t-1}$:     Energie (letzter gespeicherter Wert)
k:     Eichkonstante
I:     Primärstrom (Dauer- oder Überstrom)
$c_1$:     Abkühlfaktor

wird eine diskrete Folge von Energiewerten $E_{t-1}$, $E_t$ wie folgt berechnet:

$$E_t = E_{t-1} + k \cdot I^2 - c_1 \cdot E_{t-1}$$

Der aktuelle Energiewert $E_t$ hängt also vom aktuellen Wert I des Primärstromes und vom vorhergehenden Energiewert $E_{t-1}$ ab. Die zwei Multiplikationen bedingen einen erhöhten Berechnungsaufwand.

Auf die zweite der obigen Multiplikationen wird in einem alternativen Algorithmus verzichtet. Dieser basiert auf einer konstanten Abkühlrate, wiedergegeben durch die Abkühlkonstante $c_2$ (die übrigen Bezeichnungen bleiben gleich):

$$E_t = E_{t-1} + k \cdot I^2 - c_2$$

Dabei muss sichergestellt werden, dass die Energie nicht negative Werte annimmt. Dies wird unter anderem dadurch erreicht, dass die Abkühlkonstante $c_2$ den Joul'schen Wärmeeintrag eines Nennstromes $I_N$ nicht übertrifft. Durch die gegenüber dem ersten Algorithmus erfolgte Vereinfachung ergeben sich bei der Implementation einige Vorteile und im Betrieb ein reduzierter Rechenaufwand.

Als Kompromisslösung zwischen den beiden genannten Alternativen wird anstelle einer festen Abkühlrate eine Wertetabelle mit einer Anzahl abgestufter Abkühlkonstanten $c_2$ angelegt. Bei jeder Ermittlung der aktuellen Energie $E_t$ wird in dieser Nachschlagetabelle der dem bisherigen Energiewert $E_{t-1}$ nächstgelegene tabellierte Energiewert konsultiert und die dazugehörige Abkühlkonstante $c_{2,t-1}$ übernommen. Dieses Vorgehen führt bereits unter Zuhilfenahme einer Tabelle mit 8 oder 16 Einträgen zu einer verbesserten Genauigkeit ohne gesteigerten Rechenaufwand.

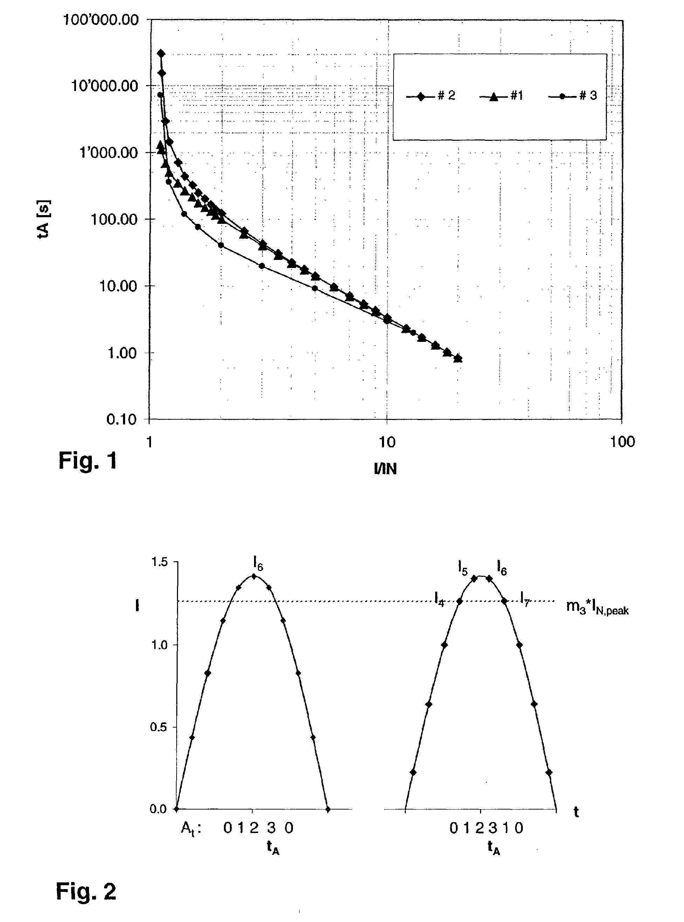

In Fig.1 ist ein graphischer Vergleich von Auslösekennlinien (Auslösezeitpunkt $t_A$ in Abhängigkeit eines normiertem Überstromes $I/I_N$) zu den vorgestellten Algorithmen aufgezeigt. Kennlinie #1 entspricht einer linearen Abkühlung gemäss dem ersten Algorithmus, Kennlinie #2 resultiert aus dem zweiten Algorithmus mit einer konstanten Abkühlrate, und Kennlinie #3 gehört zu einem konventionellen Leitungsschutzschalter mit einem Bimetall-Auslöser. Klar erkenntlich ist die logarithmische Form der Kennlinie, d.h. ihre Abweichung von einer Geraden in der gewählten doppelt-logarithmischen Darstellung. Weiter ist offensichtlich, dass durch die Wahl des Abkühlfaktors oder der — konstanten eine beträchtliche Anzahl Freiheitsgrade für die nachzubildende Auslösekennlinie geschaffen werden. So kann die vertikale Asymptote verschoben werden, oder eine verzögerte Überstromauslösung entsprechend einer indirekten Beheizung eines Bimetalles durch eine Heizwicklung nachgebildet werden.

Als Nächstes wird eine elektronische Nachbildung der Funktion der Schlagspule im Kurzschluss- oder Sofortauslösebereich beschrieben. Für eine konventionelle Schlagspule kann die zeitkontinuierliche Auslösebedingung für einen Überstrom I beziehungsweise den Auslösezeitpunkt $t_A$ so formuliert werden:

$$I(t_A) > m \cdot I_{N,peak}$$

Dabei ist m ein Schwellwert grösser als eins und $I_{N,peak}$ der Scheitelwert des Nominal- oder Bemessungsstromes $I_N$. Der Algorithmus für die Auslösung im Kurzschlussbereich basiert auf der vereinfachenden Annahme einer mit konstanter Abtastfrequenz $f_{ADC}$ erfolgenden Abtastung des Primärstromes, wobei die Abtastfrequenz $f_{ADC}$ ein $N_f$-faches der Netzfrequenz $N_{prim}$ und vorzugsweise $N_f = 20$ ist. Die abgetasteten Primärstrom-Messwerte $I_t$ bilden eine Folge; der Auslösezeitpunkt $t_A$ ist erreicht und Auslösung erfolgt, falls für mindestens $N_A$ unmittelbar aufeinanderfolgende Momentanwerte $I_t$ die folgende Bedingung erfüllt ist:

$$I_t > m_{NA} \cdot I_{N,peak}$$

Dabei hängt die Schwellwertreduktion $m_{NA}$ von der Auslösekennzahl $N_A$, vom Schwellwert m sowie von der Abtastfrequenz $f_{ADC}$ ab, denn es muss berücksichtigt werden, dass analog zu der konventionellen Auslösebedingung eine Auslösung auch dann erfolgen soll, wenn nur gerade der Scheitelwert des Überstromes obengenannte zeitkontinuierliche Auslösebedingung erfüllt. Da für diesen Fall bis auf den Scheitelwert alle weiteren diskreten Abtastwerte allesamt unter $m\,I_{N,peak}$, liegen, muss $m_{NA}$ entsprechend reduzierend wirken.

Fig.2 illustriert zwei diesbezügliche Beispiele mit $N_A = 3$. Die aufeinanderfolgenden Werte $A_t$ eines Momentanwert- oder Auslösezähler A sind unterhalb der beiden Halbwellen eingetragen. In der linken Halbwelle liegt der Abtastpunkt $I_6$ genau auf dem Maximum des Überstromes I. Der oben angesprochene, ungünstigste Fall ist in der rechten Halbwelle gezeigt, deren Maximum liegt symmetrisch zwischen den zwei Abtast-

punkten $I_5$ und $I_6$. Die Schwellwertreduktion $m_{NA} = m_3$ muss dann so gelegt werden, dass zusätzlich zu diesen noch ein dritter Abtastpunkt $I_4$ und damit, als Folge der Symmetrie, auch ein vierter Abtastpunkt $I_7$ über den Wert $m_3 \cdot I_{N,peak}$ zu liegen kommt. Es folgt also

$$m_3 = m \cdot \sin\left[2\pi\left(0.25 - 1.5\frac{f_{prim}}{f_{ADC}}\right)\right]$$

Die nach jeder Abtastung neu ermittelte Systemgrösse ist in diesem Fall der Momentanwert- oder Auslösezähler A, welcher die Anzahl der seit dem letzten unterkritischen Messwert registrierten Überschreitungen zählt und bei Erreichen der Auslösekennzahl $N_A$ auslöst. Zur erfindungsgemässen Korrelation zwischen aufeinanderfolgenden Systemgrössenwerten ist NA $\geq$ 2, es entscheidet also nicht nur der aktuelle Wert. Es ist zu bemerken, dass es auch wegen der Anfälligkeit gegen Störimpulse vorteilhaft ist, nicht auf einen einzelnen Messwert abzustellen.

Aus der folgenden Tabelle ergeben sich beispielhaft Werte für $m_3$ für verschiedene Frequenzen $f_{ADc}$ und $f_{prim}$. Falls für den Parameter $m_3$ eine Toleranz von ca. $\pm 3\%$ akzeptiert wird, kann die Parametrierung für Primärströme von 50 Hz und von 60 Hz einheitlich erfolgen.

| $f_{Prim}$ | $f_{ADC}$ | $\sqrt{2}m_3/m$ | Mittelw. | Abw. |
|---|---|---|---|---|
| 50 Hz | 1000 Hz | 1.260 | 1.227 | +2.7% |
| 60 Hz | | 1.194 | | -2.7% |
| 50 Hz | 975 Hz | 1.252 | 1.218 | +2.8% |
| 60 Hz | | 1.183 | | -2.9% |

Abschliessend wird nachfolgend die Nachbildung einer logarithmischen Kennlinie in einem Selektivbereich erläutert. Dies geschieht durch eine Erweiterung des vorgängig eingeführten Algorithmus, und zwar indem die Sofortauslösungsbedingung (welche $N_{A1}$ aufeinanderfolgende "Kurzschlussstrommesswerte" fordert) ergänzt wird durch eine Verzögerungsbedingung, welche ihrerseits fordert, dass die Sofortauslösebedingung mehrere Male in Folge erfüllt ist, wobei sich die mehrfache Erfüllung der Sofortauslösebedingung auch auf mehrere aufeinanderfolgende Halbwellen aufteilen kann. Neben der ersten Sofortauslösebedingung kann eine parallel dazu laufende, zweite Sofortauslösebedingung mit einer zweiten Auslösekennzahl $N_{A2} > N_{A1}$ ebenfalls zur Erfüllung der Verzögerungsbedingung beitragen.

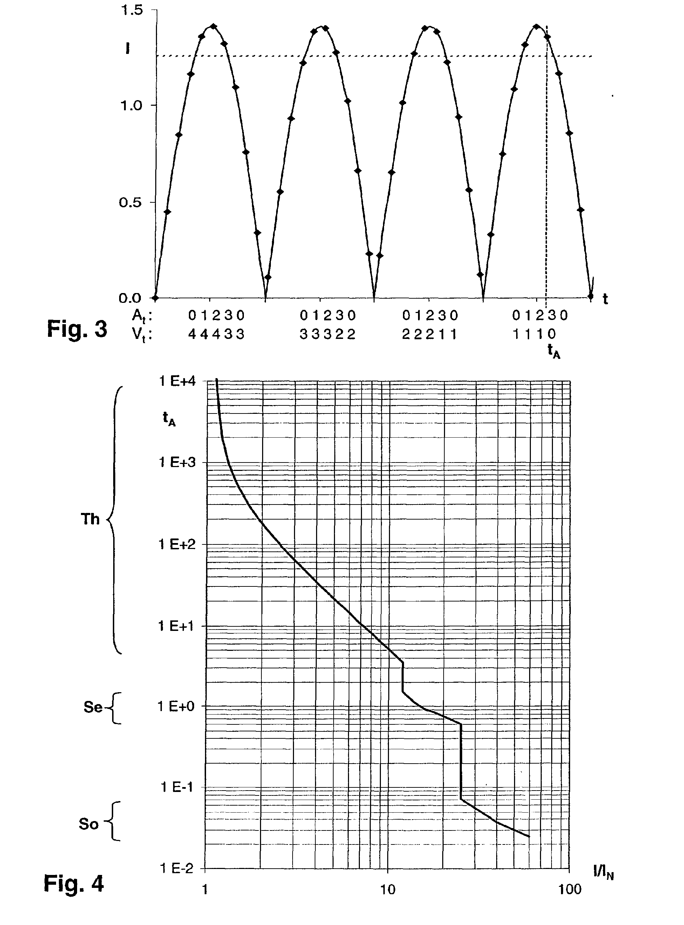

In Fig.3 ist eine konkrete Implementierung einer verzögerten Auslösung, basierend auf einer Sofortauslösung mit einer ersten Auslösekennzahl $N_{A1} = 3$, und einer Verzögerungskennzahl $N_v = 4$ dargestellt. Dabei ist nur der Betrag des Überstromes I von Bedeutung, und die Halbwellen sind dementsprechend alle im positiven Bereich gezeigt.

Jedes Mal, wenn für einen Momentanwert $I_t$ des Primärstromes I die Bedingung

$$I_t > m_{NA1}I_{N,peak}$$

erfüllt ist, wird ein erster Auslösezähler A inkrementiert (in Fig.3 der obere Zähler auf der ersten Zeile unterhalb der Zeitachse). Der Auslösezähler A wird jedes Mal auf seinen Startwert Null zurückgesetzt, wenn für einen Wert $I_t$ die obige Bedingung nicht erfüllt ist.

Wenn der Zählerstand des Auslösezählers A nach der Inkrementierung gleich der ersten Auslösekennzahl $N_{A1} = 3$ ist, wird der Auslösezähler A ebenfalls auf seinen Startwert Null zurückgesetzt und ein Selektiv- oder Verzögerungszähler V (in Fig.3 der untere Zähler auf der zweiten Zeile) um eine Einheit verringert oder dekrementiert. Dieser Verzögerungszähler zählt sozusagen die Halbwellenäquivalente und stellt die für den vorliegenden Fall massgebende Systemgrösse dar.

Der Verzögerungszähler V wird zusätzlich dekrementiert, wenn mehr als $N_{A2} = 10$ aufeinanderfolgende Momentanwerte $I_t$ die obige Bedingung erfüllen. Andererseits wird der Verzögerungszähler jedes Mal auf seinen Startwert $N_v = 4$ zurückgesetzt, wenn mehr als $N_{A2} = 10$ aufeinanderfolgende Momentanwerte $I_t$ die obige Bedingung nicht erfüllen.

Wenn der Stand $V_t$ des Verzögerungszählers V nach der Dekrementierung = 0 ist, gilt der Auslösezeitpunkt $t_A$ als erreicht und es erfolgt Auslösung. Dazu ist zu bemerken, dass bei einem sehr grossen Kurzschlussstrom während der ersten Halbwelle durchaus sechs Momentanwerte $I_t$ in Folge die obengenannte Bedingung erfüllen können. Dann wird der Verzögerungszähler während dieser einen Halbwelle zweimal dekrementiert, falls zudem $N_{A2}$ kleiner oder gleich sechs ist, sogar dreimal. Daraus resultiert schlussendlich die logarithmische Form der Auslösekennlinie.

Die vorgehend beschriebene elektronische Nachbildung der Funktion der Schlagspule im Sofortauslösebereich erfolgt durch eine schnell aufstartende Hardware, umfassend einen Mikrocontroller sowie einen schnell aufstartenden Oszillator, in Verbindung mit einem schnellen Software-Algorithmus. Dies dient der Sicherstellung eines Schaltvermögens innerhalb der ersten Halbwelle und insbesondere innerhalb von wenigen ms. Für die Nachbildung der Bimetallfunktion allein ist natürlich keine schnell aufstartende Hardware vonnöten, es ist ausreichend, wenn der Auslöser nach 5-10 Halbwellen operativ ist. Demgegenüber wird für sehr hohe Kurzschlussströme eine Auslösezeit im Sub-Millisekundenbereich gefordert, die durch die Elektronik nicht ohne Weiteres erreicht werden kann. Hierfür wird gegebenenfalls auch weiterhin zusätzlich eine Schlagspule oder ein magnetisches Schnellauslösesystem eingesetzt.

Durch Verwendung eines Mikrocontrollers mit integriertem oder externem Temperatursensor kann auf einfache Weise eine Korrektur einer gegebenenfalls vorhandenen Temperaturdrift der Hardware vorgenommen werden. Überdies kann bei Überschreiten einer programmierten Grenztemperatur der Schaltvorgang ausgelöst werden.

In Fig.4 schlussendlich ist eine Auslösekennlinie eines Überstromauslösers für elektronische Schutzschalter mit drei Teilbereichen dargestellt, welche jeder für sich eine logarithmische Form hat und gemäss den vorgestellten Verfahren nachgebildet worden ist. Die Teilbereiche umfassen einen Überlastbereich Th, einen Selektivbereich Se mit verzögerter Sofortauslösung und einen Instantan- oder Sofortauslösebereich So. Die einzelnen Teilbereiche werden diskontinuierlich gewechselt, sobald die Primärstromstärke bestimmte Schwellwerte überschreitet.

BEZUGSZEICHENLISTE

| $t_A$ | Auslösezeit |
|---|---|
| I | Primär- oder Überstrom |
| $I_N$ | Nominal- oder Bemessungsstrom |
| $m_{NA}$ | Schwellwertreduktion |
| A | Auslösezähler |
| V | Verzögerungszähler |
| Th | Überlastbereich |
| So | Sofortauslösebereich |
| Se | Selektivbereich |

**Patentansprüche**

1. Überstromauslöser für elektronische Schutzschalter mit einer Auslösekennlinie umfassend einen Überlastbereich (Th) und einen Sofortauslösebereich (So), **dadurch gekennzeichnet, dass** die Auslösekennlinie einen logarithmischen Teilbereich aufweist.

2. Überstromauslöser nach Anspruch 1, **dadurch gekennzeichnet, dass** die Auslösekennlinie im Sofortauslösebereich (So) logarithmisch ist.

3. Überstromauslöser nach Anspruch 1, **dadurch gekennzeichnet, dass** die Auslösekennlinie im Überlastbereich (Th) logarithmrischh ist.

4. Überstromauslöser nach Anspruch 1, **dadurch gekennzeichnet, dass** die Auslösekennlinie zwischen dem Überlastbereich (Th) und dem Sofortauslösebereich (So) einen Selektivbereich (Se) mit verzögerter Sofortauslösung umfasst, und dass die Auslösekennlinie im Selektivbereich logarithmisch ist.

5. Verfahren zur Nachbildung einer Auslösekennlinie eines elektronischen Schutzschalters mit einem ersten logarithmischen Kennlinienabschnitt (Th, So, Se), wobei in diskreten zeitlichen Abständen Momentanwerte ($E_t$; $A_t$, $V_t$) einer Systemgrösse (E, A, V) ermittelt werden und eine Auslösung dann erfolgt, wenn ein Zustandswert ($E_t$, $A_t$, $V_t$) einen vorbestimmten Grenzwert ($N_A$, $N_V$) überschreitet, **dadurch gekennzeichnet, dass** jeder neu ermittelte Zustandswert von zumindest einem seiner vorherigen Zustandswerte ($E_{t-1}$, $A_{t-1}$, $V_{t-1}$) abhängt.

6. Verfahren nach Anspruch 5, **dadurch gekennzeichnet, dass** die Ermittlung eines aktuellen Zustandswertes ($E_t$, $A_t$, $V_t$) eine Messung eines Momentanwerts ($I_t$) eines Primärstromes I umfasst und mit einer konstanten Abtastfrequenz ($f_{ADC}$) erfolgt.

7. Verfahren nach Anspruch 5 oder 6, **dadurch gekennzeichnet, dass** die Auslösekennlinie im Überlastbereich (Th) logarithmisch ist und die Systemgrösse eine Energie (E) ist, und dass die Ermittlung eines Zustandswertes ($E_t$) einen vorherigen Energiewert ($E_{t-1}$), eine Energiezunahme entsprechend einer Joule'schen Erwärmung und eine Energieabnahme entsprechend einer Abkühlung berücksichtigt.

8. Verfahren nach Anspruch 7, **dadurch gekennzeichnet, dass** die einer Abkühlung entsprechende Energieabnahme proportional zum vorherigen Energiewert ($E_{t-1}$) berechnet oder in Abhängigkeit des vorherigen Energiewertes ($E_{t-1}$) durch einen tabellierten Wert einer Abkühlkonstante ($c_2$) bestimmt wird.

9. Verfahren nach Anspruch 5 oder 6, **dadurch gekennzeichnet, dass** die Auslösekennlinie im Sofortauslösebereich (So) logarithmisch ist und die Systemgrösse ein Auslösezähler (A) ist, welcher eine Anzahl aufeinanderfolgender Überstromwerte wiedergibt.

10. Verfahren nach Anspruch 9, **dadurch gekennzeichnet, dass** zu einem vorgegebenen konventionellen Schwellwert (m) eine numerische Schwellwertreduktion ($m_{NA}$) in Abhängigkeit von einer konstanten Abtastfrequenz ($f_{ADC}$) und einer Auslösekennzahl ($N_A$) bestimmt wird.

11. Verfahren nach Anspruch 5 oder 6, **dadurch gekennzeichnet, dass** die Auslösekennlinie in einem Selektivbereich (Se) logarithmisch ist und die Systemgrösse ein Verzögerungszähler (V) ist, welcher eine Anzahl aufeinanderfolgender erfüllter Sofortauslösebedingungen wiedergibt.

**12.** Computerprogramm zur Ausführung des Verfahrens nach einem der Ansprüche 5 bis 11 durch eine Auswerteeinheit eines Überstromauslösers für elektronische Schutzschalter.

**Fig. 1**

**Fig. 2**

**Fig. 3**

$A_t$: 0 1 2 3 0   0 1 2 3 0   0 1 2 3 0   0 1 2 3 0

$V_t$: 4 4 4 3 3   3 3 3 2 2   2 2 2 1 1   1 1 1 0

$t_A$

**Fig. 4**

# EP 1 383 217 A1

| | Europäisches Patentamt | EUROPÄISCHER RECHERCHENBERICHT | Nummer der Anmeldung EP 02 40 5610 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 129 623 A (S & C ELECTRIC CO) 2. Januar 1985 (1985-01-02) | 1,3,4 | H02H3/093 |
| A | * Seite 9, Zeile 3 – Zeile 21; Abbildung 4 * | 5 | |
| | --- | | |
| X | EP 0 133 968 A (MITSUBISHI ELECTRIC CORP) 13. März 1985 (1985-03-13) | 1,3,4 | |
| A | * Seite 4, Absatz 2; Abbildung 5B * | 5 | |
| | --- | | |
| A | DE 100 32 655 A (SIEMENS AG) 10. Januar 2002 (2002-01-10) * Zusammenfassung * | 1 | |
| D | & WO 02 01693 A 3. Januar 2002 (2002-01-03) | 1 | |
| | --- | | |
| D,A | DE 40 00 627 A (GEN ELECTRIC) 18. Juli 1991 (1991-07-18) * Seite 5, Zeile 66 – Seite 6, Zeile 14; Abbildung 5 * | 5 | |
| | ----- | | |

| | RECHERCHIERTE SACHGEBIETE (Int.Cl.7) |
|---|---|
| | H02H |

Der vorliegende Recherchenbericht wurde für alle Patentansprüche erstellt

| Recherchenort | Abschlußdatum der Recherche | Prüfer |
|---|---|---|
| DEN HAAG | 4. Dezember 2002 | Salm, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

# EP 1 383 217 A1

ANHANG ZUM EUROPÄISCHEN RECHERCHENBERICHT
ÜBER DIE EUROPÄISCHE PATENTANMELDUNG NR.

EP 02 40 5610

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-12-2002

| Im Recherchenbericht angeführtes Patentdokument | Datum der Veröffentlichung | Mitglied(er) der Patentfamilie | Datum der Veröffentlichung |
|---|---|---|---|
| EP 0129623 A | 02-01-1985 | AT 57447 T | 15-10-1990 |
| | | CA 1215459 A1 | 16-12-1986 |
| | | DE 3381939 D1 | 15-11-1990 |
| | | EP 0129623 A1 | 02-01-1985 |
| EP 0133968 A | 13-03-1985 | JP 1702036 C | 14-10-1992 |
| | | JP 3059655 B | 11-09-1991 |
| | | JP 60032511 A | 19-02-1985 |
| | | JP 60030016 A | 15-02-1985 |
| | | JP 1702037 C | 14-10-1992 |
| | | JP 3059656 B | 11-09-1991 |
| | | JP 60032512 A | 19-02-1985 |
| | | JP 60032211 A | 19-02-1985 |
| | | DE 3478642 D1 | 13-07-1989 |
| | | EP 0133968 A1 | 13-03-1985 |
| | | ZA 8405706 A | 27-03-1985 |
| DE 10032655 A | 10-01-2002 | DE 10032655 A1 | 10-01-2002 |
| | | WO 0201693 A1 | 03-01-2002 |
| DE 4000627 A | 18-07-1991 | US 4937757 A | 26-06-1990 |
| | | CA 1321820 A1 | 31-08-1993 |
| | | DE 4000627 A1 | 18-07-1991 |

Für nähere Einzelheiten zu diesem Anhang : siehe Amtsblatt des Europäischen Patentamts, Nr.12/82

11